# EUROPÄISCHE PATENTSCHRIFT

(11) **EP 3 305 134 B1**
(45) Veröffentlichungstag und Bekanntmachung des Hinweises auf die Patenterteilung: **02.01.2019**
(21) Anmeldenummer: 16192646.4
(22) Anmeldetag: 06.10.2016
(51) Int. Cl.: A47C 17/84, B60P 3/39, B66D 3/06

(54) **VERSTELL-VORRICHTUNG FÜR EIN HUBBETT**
ADJUSTABLE DEVICE FOR A LIFTING BED
DISPOSITIF DE RÉGLAGE D'UNE COUCHETTE REPLIABLE

(43) Veröffentlichungstag der Anmeldung: 11.04.2018
(73) Patentinhaber: Alu-Line Metallbearbeitungs GmbH, 88348 Bad Saulgau (DE)
(72) Erfinder: Storz, Rainer, 78050 VS-Villingen (DE)
(74) Vertreter: Kiessling, Christian

(56) Entgegenhaltungen:
- EP-A1- 2 987 429
- FR-A1- 2 675 360
- US-A- 4 641 596

## Beschreibung

Die Erfindung betrifft eine Verstell-Vorrichtung zum Verstellen der Länge von vier Zugseilen eines mit Hilfe der Zugseile höhenverstellbaren Hubbettes, das reversibel von einem ersten Niveau auf ein zweites Niveau förderbar ist.

Ein relevantes Dokument des Stands der Technik, welches zum Verständnis der Erfindung beiträgt, ist im Folgenden angeführt: - FR 2 675 360 A1.

Mit Verstell-Vorrichtungen versehene Hubbetten werden im Stand der Technik insbesondere in den Kabinen größerer Fahrzeuge zu Wasser, Land und Luft verwendet. Die bekannten Bett-Vorrichtungen weisen dabei den Nachteil auf, dass ein herkömmlicher Expansionsmechanismus zum Fördern eines Bettrahmens aus einer Stauposition in eine Nutzposition keine Möglichkeit enthält, genaue Vorgaben bezüglich des Ausmaßes einer vertikalen Bewegung und Arretieren auf vorgegebenem vertikalen Niveau eines Hubbettes zu geben.

Die Ursache obigen Nachteils ist darin zu sehen, dass die herkömmlichen Expansionsmechanismen in der Regel Schwenkelemente enthalten, die bei Bewegung eines Bettrahmens aus einer Stauposition in eine Nutzposition eine Schwenkbewegung um eine fixe Achse ausführen, so dass einer erwünschten senkrechten Hubbewegung eine horizontale Bewegungskomponente in durch die Konstruktion festgelegter, streng vorgegebener Weise überlagert ist.

Daher ist ein notwendiger Stauraum für ein herkömmliches Hubbett größer als bei einem Hubbett, dessen allein vertikale Bewegungskomponente auch nach längerem Gebrauch zuverlässig vorgebbar ist.

Aufgabe der Erfindung ist es deshalb, eine Verstell-Vorrichtung für ein Hubbett zu schaffen, mit dessen Hilfe eine in ihrem Ausmaß genau vorgebbare und dabei schnell und sicher durchführbare Hubbewegung aus einer Stauposition in eine Nutzposition in allein vertikaler Bewegungsrichtung durchführbar ist.

Für eine Vorrichtung der eingangs genannten Art wird diese Aufgabe erfindungsgemäß dadurch gelöst, dass die Verstelleinrichtung eine an dem Bettrahmen befestigte Trägerplattform enthält, an der ein entlang einer linearen Führungseinrichtung beweglich gelagerter Führungsschlitten angebracht ist, wobei jedem der vier Zugseile eine an dem Führungsschlitten angebrachte Umlenkrolle mit Funktion und Wirkung einer losen Umlenkrolle eines Flaschenzuges zugeordnet ist, und wobei eine lineare Bewegung des Führungsschlittens ein gleichzeitiges und gleichmäßiges Verstellen der vier Zugseile bewirkt. Erfindungsgemäß ist die Trägerplattform rechteckig ausgebildet und weist ein Kopfende und ein dem Kopfende gegenüberstehendes Fußende auf, wobei jedes der vier Zugseile im Bereich des Fußendes der Trägerplattform fest verankert ist.

Bevorzugte Ausführungsformen der Erfindung sind Gegenstand der Unteransprüche.

Bei der erfindungsgemäßen Vorrichtung wird durch die Merkmalskombination, dass die Verstelleinrichtung eine an dem Bettrahmen befestigte Trägerplattform enthält, an der ein entlang einer linearen Führungseinrichtung beweglich gelagerter Führungsschlitten angebracht ist, wobei jedem der vier Zugseile eine an dem Führungsschlitten angebrachte Umlenkrolle mit Funktion und Wirkung einer losen Umlenkrolle eines Flaschenzuges zugeordnet ist, und wobei eine lineare Bewegung des Führungsschlittens ein gleichzeitiges und gleichmäßiges Verstellen der vier Zugseile bewirkt, eine in ihrem Ausmaß genau vorgebbare und dabei schnell und sicher durchführbare Hubbewegung eines betreffenden Hubbettes erreicht.

Des Weiteren ermöglicht die erfindungsgemäße Konstruktion eine sehr flache Ausführung der Verstelleinrichtung eines Hubbettes. Dies erlaubt vergleichsweise geringe Abmessungen beispielsweise eines Spindelantriebes mit Elektromotor oder einer Gasfeder zum Durchführen einer Linear-Bewegung des Führungsschlittens.

Gemäß einer ersten bevorzugten Ausführungsform der erfindungsgemäßen Vorrichtung ist vorgesehen, dass zwei Kopf-Zugseile jeweils sowohl um eine an einem Ende der Trägerplattform angebrachte feste Umlenkrolle als auch um eine an dem Führungsschlitten angebrachte Umlenkrolle geführt, wobei zwei Fuß-Zugseile lediglich um eine an dem Führungsschlitten angebrachte Umlenkrolle geführt sind.

Der Führungsschlitten enthält vorzugsweise eine vordere und eine rückwärtige Stirnfläche sowie zwei Seitenflächen, wobei im Bereich der jeweiligen Seitenflächen Laufrollen für eine reibungsarme Bewegung des Führungsschlittens entlang der Führungseinrichtung vorgesehen sind.

Des Weiteren ist die Führungseinrichtung vorzugsweise von zwei parallel angeordneten Führungsschienen gebildet, die jeweils ein Lager für die im Bereich der jeweiligen Seitenflächen angeordneten Laufrollen des Führungsschlittens bilden.

Die beiden festen Umlenkrollen der Trägerplattform können vorzugsweise in der Nachbarschaft der Verankerungen der vier Zugseile angeordnet sein.

Gemäß einer wichtigen bevorzugten Ausführungsform der erfindungsgemäßen Vorrichtung sind jeweils ein erstes Kopf-Zugseil und ein erstes Fuß-Zugseil in der Nachbarschaft einer ersten der beiden festen Umlenkrollen verankert und jeweils ein zweites Kopf-Zugseil und ein zweites Fuß-Zugseil in der Nachbarschaft einer zweiten der beiden festen Umlenkrollen verankert. Als Folge davon ist ein Zwischenraum geschaffen, der einen Platzgewinn darstellt.

Gemäß einer anderen wichtigen bevorzugten Ausführungsform der erfindungsgemäßen Vorrichtung sind die Verankerungen des ersten Kopf-Zugseils und des ersten Fuß-Zugseils einerseits sowie die Verankerungen des zweiten Kopf-Zugseils und des zweiten Fuß-Zugseils andererseits zwischen den sich gegenüberstehenden beiden festen Umlenkrollen angeordnet.

Die beiden Umlenkrollen der beiden Fuß-Zugseile sind vorzugsweise auf sich gegenüberstehenden Seiten im Bereich der vorderen Stirnfläche des Führungsschlittens angeordnet und die beiden Umlenkrollen der beiden Kopf-Zugseile sind vorzugsweise auf sich gegenüberstehenden Seiten im Bereich der rückwärtigen Stirnfläche des Führungsschlittens angeordnet.

Gemäß einer weiteren bevorzugten Ausführungsform der erfindungsgemäßen Vorrichtung ist zwischen jeweils einer Umlenkrolle eines Kopf-Zugseiles und einer sich auf der gleichen Seite des Führungsschlittens befindlichen Umlenkrolle eines Fuß-Zugseiles eine Hilfsrolle angebracht, um ein Ineinandergreifen von Kopf-Zugseil und Fuß-Zugseil zu verhindern und eine freie Bewegung von Kopf-Zugseil und Fuß-Zugseil sicherzustellen. Als Folge davon sind die Achsen beider Umlenkrollen dichter neben einander platzierbar als bei Ausführung ohne Hilfsrollen, wodurch wiederum ein Platzgewinn zu verzeichnen ist.

Um einen funktionalen Zugang zu einem Hubbett einfach und effektiv zu gestalten ist jedes der vier Zugseile über eine oder mehr Zuführrollen in Richtung einer zugeordneten Ecke des Bettgestelles geführt, wobei ein betreffendes Ende jedes der vier Zugseile im Bereich eines oberhalb des Bettgestells angeordneten Fixpunktes.

Es hat sich im Gebrauch als klar vorteilhaft erwiesen als Zugseil einen Riemen zu verwenden.

Gemäß einer weiterer bevorzugter Ausführungsformen der erfindungsgemäßen Vorrichtung ist die Länge der Trägerplattform auf zwischen 100 cm und 150 cm bemessen, wobei eine lineare Bewegung des Führungsschlittens mit Hilfe einer motorgetriebenen Spindel oder mit Hilfe einer Gasdruckfeder erfolgen kann, wobei der Hub der Spindel bzw. der Gasdruckfeder auf zwischen 60 cm und 120 cm bemessen sein sollte.

Die erfindungsgemäße Vorrichtung wird im Folgenden anhand einer bevorzugten Ausführungsform erläutert, die in den Figuren der Zeichnung dargestellt ist. Darin zeigen:
- Fig.1: eine bevorzugte Ausführungsform der erfindungsgemäßen Vorrichtung in Ansicht von schräg oben;
- Fig.2: die in Figur 1 dargestellte bevorzugte Ausführungsform der erfindungsgemäßen Vorrichtung in einer Ansicht von oben;
- Fig.3: die in Figur 1 dargestellte bevorzugte Ausführungsform der erfindungsgemäßen Vorrichtung in einer Detailansicht.

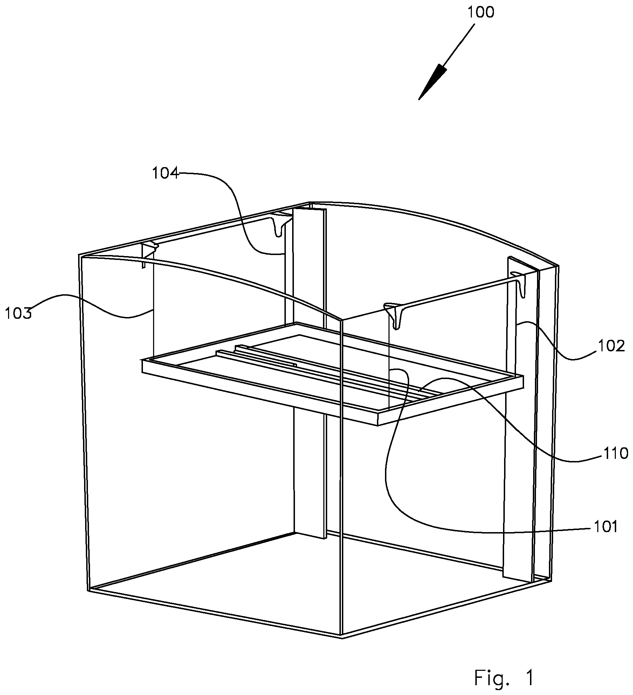

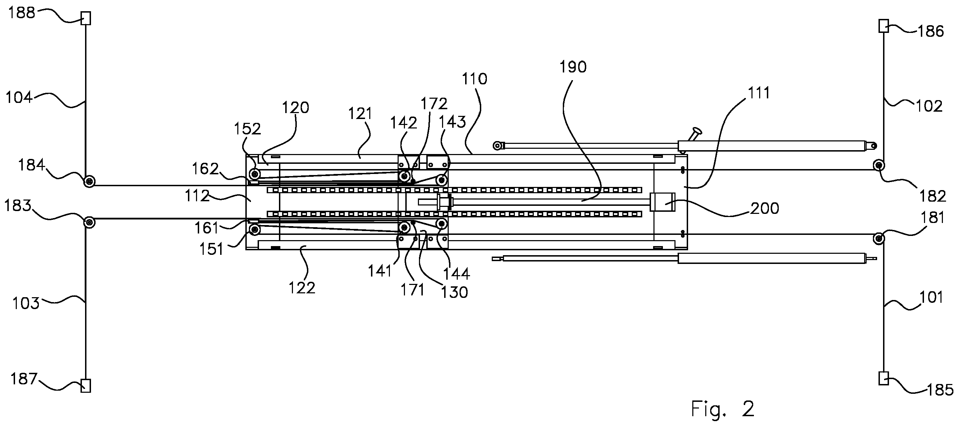

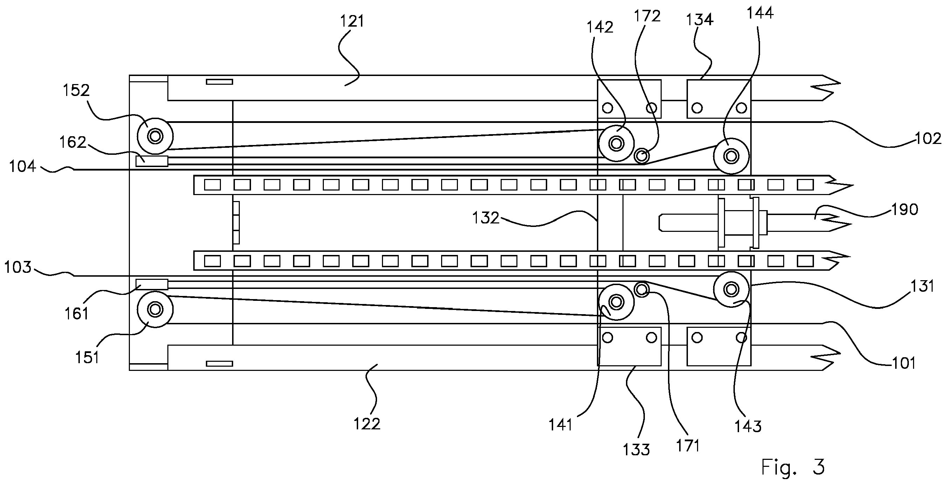

Die in den Figuren 1 bis 3 dargestellte erfindungsgemäße Verstell-Vorrichtung 100 ist zum Verstellen der Länge von vier Zugseilen 101, 102, 103, 104 eines mit Hilfe der Zugseile 101, 102, 103, 104 höhenverstellbaren Hubbettes vorgesehen, das reversibel von einem ersten Niveau auf ein zweites Niveau förderbar ist.

Die Verstelleinrichtung 100 enthält eine an dem Bettrahmen befestigte Trägerplattform 110, an der ein entlang einer linearen Führungseinrichtung 120 beweglich gelagerter Führungsschlitten 130 angebracht ist, wobei jedem der vier Zugseile 101, 102, 103, 104 eine an dem Führungsschlitten 130 angebrachte Umlenkrolle 141, 142, 143, 144 mit Funktion und Wirkung einer losen Umlenkrolle eines Flaschenzuges zugeordnet ist.

Eine lineare Bewegung des Führungsschlittens 130 bewirkt dabei ein gleichzeitiges und gleichmäßiges Verstellen der vier Zugseile 101, 102, 103, 104.

Zwei Kopf-Zugseile 101, 102 sind jeweils sowohl um eine an einem Ende der Trägerplattform angebrachte feste Umlenkrolle 151, 152, als auch um eine an dem Führungsschlitten 130 angebrachte Umlenkrolle 141, 142 geführt, und zwei Fuß-Zugseile 103, 104 sind lediglich um eine an dem Führungsschlitten 130 angebrachte Umlenkrolle 143, 144 geführt.

Der Führungsschlitten 130 enthält eine vordere Stirnfläche 131 und eine rückwärtige Stirnfläche 132 sowie zwei Seitenflächen, 133, 134, wobei im Bereich der jeweiligen Seitenflächen 133, 134 Laufrollen für eine reibungsarme Bewegung des Führungsschlittens 130 entlang der Führungseinrichtung 120 vorgesehen sind.

Die Führungseinrichtung 120 ist von zwei parallel angeordneten Führungsschienen 121, 122 gebildet, die jeweils ein Lager für die im Bereich der jeweiligen Seitenflächen 133, 134 angeordneten Laufrollen des Führungsschlittens 130 bilden.

Die Trägerplattform 110 ist rechteckig ausgebildet und weist ein Kopfende 111 und ein dem Kopfende 111 gegenüberstehendes Fußende 112 auf, wobei jedes der vier Zugseile 101, 102, 103, 104 im Bereich des Fußendes 112 der Trägerplattform 110 fest verankert ist. Die beiden festen Umlenkrollen 151, 152 der Trägerplattform 110 sind dabei in der Nachbarschaft der Verankerungen 161, 162 der vier Zugseile 101, 102, 103, 104 angeordnet.

Jeweils ein erstes Kopf-Zugseil 101 und ein erstes Fuß-Zugseil 103 sind in der Nachbarschaft einer ersten 151 der beiden festen Umlenkrollen 151, 152 verankert und jeweils ein zweites Kopf-Zugseil 102 und ein zweites Fuß-Zugseil 104 sind in der Nachbarschaft einer zweiten 152 der beiden festen Umlenkrollen 151, 152 verankert.

Die Verankerungen 161 des ersten Kopf-Zugseils 101 und des ersten Fuß-Zugseils 103 einerseits sowie die Verankerungen 162 des zweiten Kopf-Zugseils 102 und des zweiten Fuß-Zugseils 104 andererseits sind dabei zwischen den sich gegenüberstehenden beiden festen Umlenkrollen 151, 152 angeordnet.

Die beiden Umlenkrollen 143, 144 der beiden Fuß-Zugseile 103, 104 sind auf sich gegenüberstehenden Seiten im Bereich der vorderen Stirnfläche 131 des Führungsschlittens 130 angeordnet und die beiden Umlenkrollen 141, 142 der beiden Kopf-Zugseile 101, 102 sind auf sich gegenüberstehenden Seiten im Bereich der rückwärtigen Stirnfläche 132 des Führungsschlittens 130 angeordnet.

Zwischen jeweils einer Umlenkrolle 141, 142 eines Kopf-Zugseiles 101, 102 und einer sich auf der gleichen Seite des Führungsschlittens 130 befindlichen Umlenkrolle 143, 144 eines Fuß-Zugseiles 103, 104 ist eine Hilfsrolle 171, 172 angebracht, um ein Ineinandergreifen von Kopf-Zugseil 101, 102 und Fuß-Zugseil 103, 104 zu verhindern und eine freie Bewegung von Kopf-Zugseil 101, 102 und Fuß-Zugseil 103, 104 sicherzustellen.

Jedes der vier Zugseile 101, 102, 103, 104 ist über eine oder mehr Zuführrollen 181, 182, 183, 184 in Richtung einer zugeordneten Ecke des Bettgestelles geführt, wobei ein betreffendes Ende jedes der vier Zugseile 101, 102, 103, 104 im Bereich eines oberhalb des Bettgestells angeordneten Fixpunktes fixiert ist. Jedes Zugseil 101, 102, 103, 104 ist von einem Riemen gebildet.

Die Länge der Trägerplattform 110 ist auf 120 cm bemessen und der Hub einer den Führungsschlitten 130 treibenden Spindel 190 ist auf 80 cm bemessen.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Verstell-Vorrichtung (100) mit vier Zugseilen (101, 102, 103, 104) zum Verstellen der Länge der vier Zugseile (101, 102, 103, 104) eines mit Hilfe der Zugseile (101, 102, 103, 104) höhenverstellbaren Hubbettes, das reversibel von einem ersten Niveau auf ein zweites Niveau förderbar ist, wobei die Verstelleinrichtung (100) eine an dem Bettrahmen Z f befestigbare Trägerplattform (110) enthält, an der ein entlang einer linearen Führungseinrichtung (120) beweglich gelagerter Führungsschlitten (130) angebracht ist, wobei jedem der vier Zugseile (101, 102 103, 104) eine an dem Führungsschlitten (130) angebrachte Umlenkrolle (141, 142, 143, 144) mit Funktion und Wirkung einer losen Umlenkrolle eines Flaschenzuges zugeordnet ist, und wobei eine lineare Bewegung des Führungsschlittens (130) ein gleichzeitiges und gleichmäßiges Verstellen der vier Zugseile (101, 102 103, 104) bewirkt, **dadurch gekennzeichnet, dass** die Trägerplattform (110) rechteckig ausgebildet ist und ein Kopfende (111) und ein dem Kopfende (111) gegenüberstehendes Fußende (112) aufweist, wobei jedes der vier Zugseile (101, 102, 103, 104) im Bereich des Fußendes (112) der Trägerplattform (110) fest verankert ist.

2. Vorrichtung (100) nach Anspruch 1, **dadurch gekennzeichnet, dass** zwei Kopf-Zugseile (101, 102) jeweils sowohl um eine an einem Ende der Trägerplattform (110) angebrachte feste Umlenkrolle (151, 152) als auch um eine an dem Führungsschlitten (130) angebrachte Umlenkrolle (141, 142) geführt sind und zwei Fuß-Zugseile (103, 104) lediglich um eine an dem Führungsschlitten (130) angebrachte Umlenkrolle (143, 144) geführt sind.

3. Vorrichtung nach Anspruch 2, **dadurch gekennzeichnet, dass** der Führungsschlitten (130) eine vordere Stirnfläche (131) und eine rückwärtige Stirnfläche (132) sowie zwei Seitenflächen (133, 134) enthält, wobei im Bereich der jeweiligen Seitenflächen (133, 134) Laufrollen für eine reibungsarme Bewegung des Führungsschlittens (130) entlang der Führungseinrichtung (120) vorgesehen sind.

4. Vorrichtung (100) nach Anspruch 3, **dadurch gekennzeichnet, dass** die Führungseinrichtung (120) von zwei parallel angeordneten Führungsschienen (121, 122) gebildet ist, die jeweils ein Lager für die im Bereich der jeweiligen Seitenflächen (133, 134) angeordneten Laufrollen des Führungsschlittens (130) bilden.

5. Vorrichtung (100) nach einem der vorhergehenden Ansprüche, **dadurch gekennzeichnet, dass** die beiden festen Umlenkrollen (151, 152) der Trägerplattform (110) in der Nachbarschaft der Verankerungen (161, 162) der vier Zugseile (101, 102, 103, 104) angeordnet sind.

6. Vorrichtung (100) nach Anspruch 5, **dadurch gekennzeichnet, dass** jeweils ein erstes Kopf-Zugseil (101) und ein erstes Fuß-Zugseil (103) in der Nachbarschaft einer ersten (151) der beiden festen Umlenkrollen (151, 152) verankert sind und jeweils ein zweites Kopf-Zugseil (102) und ein zweites Fuß-Zugseil (104) in der Nachbarschaft einer zweiten (152) der beiden festen Umlenkrollen (151, 152) verankert sind.

7. Vorrichtung (100) nach Anspruch 6, **dadurch gekennzeichnet, dass** die Verankerungen (161) des ersten Kopf-Zugseils (101) und des ersten Fuß-Zugseils (103) einerseits sowie die Verankerungen (162) des zweiten Kopf-Zugseils (102) und des zweiten Fuß-Zugseils (104) andererseits zwischen den sich gegenüberstehenden beiden festen Umlenkrollen (151, 152) angeordnet sind.

8. Vorrichtung (100) nach den Ansprüchen 2 und 3, **dadurch gekennzeichnet, dass** die beiden Umlenkrollen (143, 144) der beiden Fuß-Zugseile (103, 104) auf sich gegenüberstehenden Seiten im Bereich der vorderen Stirnfläche (131) des Führungsschlittens (130) angeordnet sind und die beiden Umlenkrollen (141, 142) der beiden Kopf-Zugseile (101, 102) auf sich gegenüberstehenden Seiten im Bereich der rückwärtigen Stirnfläche (132) des Führungsschlittens (130) angeordnet sind.

9. Vorrichtung (100) nach Anspruch 8, **dadurch gekennzeichnet, dass** zwischen jeweils einer Umlenkrolle (141, 142) eines Kopf-Zugseiles (101, 102) und einer sich auf der gleichen Seite des Führungsschlittens (130) befindlichen Umlenkrolle (143, 144) eines Fuß-Zugseiles (103, 104) eine Hilfsrolle (171, 172) angebracht ist, um ein Ineinandergreifen von Kopf-Zugseil (101, 102) und Fuß-Zugseil (103, 104) zu verhindern und eine freie Bewegung von Kopf-Zugseil (101, 102) und Fuß-Zugseil (103, 104) sicherzustellen.

10. Vorrichtung (100) nach einem der vorhergehenden Ansprüche, **dadurch gekennzeichnet, dass** jedes der vier Zugseile (101, 102, 103, 104) über eine oder mehr Zuführrollen (181, 182, 183, 184; 185, 186, 187, 188) in Richtung einer zugeordneten Ecke des Bettgestelles geführt ist und ein betreffendes Ende jedes der vier Zugseile (101, 102, 103, 104) im Bereich eines oberhalb des Bettgestells angeordneten Fixpunktes fixierbar ist.

11. Vorrichtung (100) nach einem der vorhergehenden Ansprüche, **dadurch gekennzeichnet, dass** ein Zugseil (101, 102, 103, 104) von einem Riemen gebildet ist.

12. Vorrichtung (100) nach einem der vorhergehenden Ansprüche, **dadurch gekennzeichnet, dass** die Länge der Trägerplattform (110) auf zwischen 100 cm und 150 cm bemessen ist.

13. Vorrichtung (100) nach einem der Ansprüche 1 bis 12, **dadurch gekennzeichnet, dass** eine lineare Bewegung des Führungsschlittens (130) mit Hilfe einer mit Hilfe eines Motors (200) getriebenen Spindel (190) erfolgt, wobei der Hub der Spindel (190) auf zwischen 60 cm und 120 cm bemessen ist.

14. Vorrichtung (100) nach einem der Ansprüche 1 bis 12, **dadurch gekennzeichnet, dass** eine lineare Bewegung des Führungsschlittens (130) mit Hilfe einer mittels Druckgas betriebenen Gasdruckfeder erfolgt, wobei der Hub der Gasdruckfeder auf zwischen 60 cm und 120 cm bemessen ist.

## Claims

1. Adjustment device (100) having four pull cables (101, 102, 103, 104) for adjusting the length of the four pull cables (101, 102, 103, 104) of a lifting bed which is height-adjustable with the aid of the pull cables (101, 102, 103, 104) and which can be reversibly conveyed from a first level to a second level, wherein the adjustment device (100) comprises a carrier platform (110) which can be fastened to the bed frame and on which there is mounted a guide carriage (130) which is movably mounted along a linear guide device (120), wherein each of the four pull cables (101, 102, 103, 104) is assigned a deflection roller (141, 142, 143, 144) mounted on the guide carriage (130) and having the function and action of a loose deflection roller of a block and tackle, and wherein a linear movement of the guide carriage (130) brings about a simultaneous and uniform adjustment of the four pull cables (101, 102, 103, 104), **characterized in that** the carrier platform (110) is of rectangular design and has a head end (111) and a foot end (112) opposite to the head end (111), wherein each of the four pull cables (101, 102, 103, 104) is firmly anchored in the region of the foot end (112) of the carrier platform (110).

2. Device (100) according to Claim 1, **characterized in that** two head pull cables (101, 102) are each guided both about a fixed deflection roller (151, 152) mounted at an end of the carrier platform (110) and about a deflection roller (141, 142) mounted on the guide carriage (130), and two foot pull cables (103, 104) are guided only about a deflection roller (143, 144) mounted on the guide carriage (130).

3. Device according to Claim 2, **characterized in that** the guide carriage (130) comprises a front end face (131) and a rear end face (132) and also two lateral faces (133, 134), wherein running rollers for a low-friction movement of the guide carriage (130) along the guide device (120) are provided in the region of the respective lateral faces (133, 134) .

4. Device (100) according to Claim 3, **characterized in that** the guide device (120) is formed by two guide rails (121, 122) which are arranged in parallel and which each form a bearing for the running rollers of the guide carriage (130) which are arranged in the region of the respective lateral faces (133, 134).

5. Device (100) according to one of the preceding claims, **characterized in that** the two fixed deflection rollers (151, 152) of the carrier platform (110) are arranged in the vicinity of the anchorings (161, 162) of the four pull cables (101, 102, 103, 104).

6. Device (100) according to Claim 5, **characterized in that** in each case a first head pull cable (101) and a first foot pull cable (103) are anchored in the vicinity of a first (151) of the two fixed deflection rollers (151, 152), and in each case a second head pull cable (102) and a second foot pull cable (104) are anchored in the vicinity of a second (152) of the two fixed deflection rollers (151, 152).

7. Device (100) according to Claim 6, **characterized in that** the anchorings (161) of the first head pull cable (101) and of the first foot pull cable (103), on the one hand, and the anchorings (162) of the second head pull cable (102) and of the second foot pull cable (104), on the other hand, are arranged between the mutually opposite two fixed deflection rollers (151, 152).

8. Device (100) according to Claims 2 and 3, **characterized in that** the two deflection rollers (143, 144) of the two foot pull cables (103, 104) are arranged on mutually opposite sides in the region of the front end face (131) of the guide carriage (130), and the two deflection rollers (141, 142) of the two head pull cables (101, 102) are arranged on mutually opposite sides in the region of the rear end face (132) of the guide carriage (130) .

9. Device (100) according to Claim 8, **characterized in that** an auxiliary roller (171, 172) is mounted between in each case a deflection roller (141, 142) of a head pull cable (101, 102) and a deflection roller (143, 144), which is situated on the same side of the guide carriage (130), of a foot pull cable (103, 104), in order to prevent an inter-engagement of head pull cable (101, 102) and foot pull cable (103, 104) and to ensure a free movement of head pull cable (101, 102) and foot pull cable (103, 104).

10. Device (100) according to one of the preceding claims, **characterized in that** each of the four pull cables (101, 102, 103, 104) is guided via one or more feed rollers (181, 182, 183, 184; 185, 186, 187, 188) in the direction of an assigned corner of the bed framework, and a relevant end of each of the four pull cables (101, 102, 103, 104) can be fixed in the region of a fixed point arranged above the bed framework.

11. Device (100) according to one of the preceding claims, **characterized in that** a pull cable (101, 102, 103, 104) is formed by a belt.

12. Device (100) according to one of the preceding claims, **characterized in that** the length of the carrier platform (110) is dimensioned to be between 100 cm and 150 cm.

13. Device (100) according to one of Claims 1 to 12, **characterized in that** a linear movement of the guide carriage (130) is obtained with the aid of a spindle (190) driven with the aid of a motor (200), wherein the stroke of the spindle (190) is dimensioned to be between 60 cm and 120 cm.

14. Device (100) according to one of Claims 1 to 12, **characterized in that** a linear movement of the guide carriage (130) is obtained with the aid of a gas-pressure spring operated by means of compressed gas, wherein the stroke of the gas-pressure spring is dimensioned to be between 60 cm and 120 cm.

## Revendications

1. Dispositif de réglage (100) ayant quatre câbles de traction (101, 102, 103, 104) pour le réglage de la longueur des quatre câbles de traction (101, 102, 103, 104) d'un lit escamotable réglable en hauteur à l'aide des câbles de traction (101, 102, 103, 104), lequel peut être réversiblement déplacé d'un premier niveau à un deuxième niveau, cependant que l'équipement de réglage (100) comporte une plate-forme support (110) pouvant être fixée au cadre de lit, à laquelle un chariot de guidage (130) logé de manière mobile le long d'un équipement linéaire de guidage (120) est agencé, cependant que, à chacun des quatre câbles de traction (101, 102, 103, 104), une poulie de renvoi (141, 142, 143, 144) agencée au chariot de guidage (130) et ayant la fonction et l'effet d'une poulie de renvoi folle d'un palan est affectée, et cependant qu'un déplacement linéaire du chariot de guidage (130) engendre un réglage simultané et uniforme des
quatre câbles de traction (101, 102, 103, 104), **caractérisé en ce que** la plate-forme support (110) est réalisée sous forme rectangulaire et comporte une tête (111) et un pied (112) opposé à la tête (111), cependant que chacun des quatre câbles de traction (101, 102, 103, 104) est ancré à demeure dans la zone du pied (112) de la plate-forme support (110).

2. Dispositif (100) selon la revendication 1, **caractérisé en ce que** deux câbles de traction de tête (101, 102) sont respectivement guidés tant autour d'une poulie de renvoi (151, 152) fixe agencée à une extrémité de la plate-forme support (110) qu'autour d'une poulie de renvoi (141, 142) agencée au chariot de guidage (130), et que deux câbles de traction de tête (103, 104) sont seulement guidés tant autour d'une poulie de renvoi (143, 144) agencée au chariot de guidage (130).

3. Dispositif selon la revendication 2, **caractérisé en ce que** le chariot de guidage (130) comporte une surface frontale (131) antérieure et une surface frontale (132) arrière ainsi que deux surfaces latérales (133, 134), cependant que, dans la zone des surfaces latérales (133, 134) respectives, des roulettes sont prévues pour un déplacement sans friction du chariot de guidage (130) le long de l'équipement de guidage (120).

4. Dispositif (100) selon la revendication 3, **caractérisé en ce que** l'équipement de guidage (120) est constitué par deux rails de guidage (121, 122) agencés parallèlement qui constituent respectivement un palier pour les roulettes du chariot de guidage (130) disposées dans la zone des surfaces latérales (133, 134) respectives.

5. Dispositif (100) selon une des revendications précédentes, **caractérisé en ce que** les deux poulies de renvoi (151, 152) fixes de la plate-forme support (110) sont disposées dans le voisinage des ancrages (161, 162) des quatre câbles de traction (101, 102, 103, 104).

6. Dispositif (100) selon la revendication 5, **caractérisé en ce que** respectivement un premier câble de traction de tête (101) et un premier câble de traction de pied (103) sont ancrés dans le voisinage d'une première (151) des deux poulies de renvoi (151, 152) fixes, et que respectivement un deuxième câble de traction de tête (102) et un deuxième câble de traction de pied (104) sont ancrés dans le voisinage d'une deuxième (152) des deux poulies de renvoi (151, 152) fixes.

7. Dispositif (100) selon la revendication 6, **caractérisé en ce que** les ancrages (161) du premier câble de traction de tête (101) et du premier câble de traction de pied (103) sont disposés d'une part comme les ancrages (162) du deuxième câble de traction de tête (102) et du deuxième câble de traction de pied (104), et d'autre part entre les deux poulies de renvoi (151, 152) fixes opposées l'une à l'autre.

8. Dispositif (100) selon les revendications 2 et 3, **caractérisé en ce que** les deux poulies de renvoi (143, 144) des deux câbles de traction de pied (103, 104) sont disposées sur des côtés opposés dans la zone de la surface frontale (131) antérieure du chariot de guidage (130), et que les deux poulies de renvoi (141, 142) des deux câbles de traction de tête (101, 102) sont disposées sur des côtés opposés dans la zone de la surface frontale (132) arrière du chariot de guidage (130).

9. Dispositif (100) selon la revendication 8, **caractérisé en ce que**, entre respectivement une poulie de renvoi (141, 142) d'un câble de traction de tête (101, 102) et une poulie de renvoi (143, 144) d'un câble de traction de pied (103, 104) située du même côté du chariot de guidage (130), une poulie auxiliaire (171, 172) est agencée afin d'empêcher un entremêlement entre câble de traction de tête (101, 102) et câble de traction de pied (103, 104) et d'assurer un déplacement libre de câble de traction de tête (101, 102) et câble de traction de pied (103, 104).

10. Dispositif (100) selon une des revendications précédentes, **caractérisé en ce que** chacun des quatre câbles de traction (101, 102, 103, 104) est, par l'intermédiaire d'un ou de plusieurs poulies d'amenée (181, 182, 183, 184; 185, 186, 187, 188), guidé en direction d'un angle affecté de l'armature de lit, et qu'une extrémité concernée de chacun des quatre câbles de traction (101, 102, 103, 104) peut être fixée dans la zone d'un point de repère disposé au-dessus de l'armature de lit.

11. Dispositif (100) selon une des revendications précédentes, **caractérisé en ce qu'**un câble de traction (101, 102, 103, 104) est constitué par une courroie.

12. Dispositif (100) selon une des revendications précédentes, **caractérisé en ce que** la longueur de la plate-forme support (110) mesure entre 100 et 150 cm.

13. Dispositif (100) selon une des revendications de 1 à 12, **caractérisé en ce qu'**un déplacement linéaire du chariot de guidage (130) a lieu à l'aide d'une broche (190) actionnée à l'aide d'un moteur (200), la course de la broche (190) mesurant entre 60 cm et 120 cm.

14. Dispositif s (100) selon une des revendications de 1 à 12, **caractérisé en ce qu'**un déplacement linéaire du chariot de guidage (130) a lieu à l'aide d'un ressort à gaz actionné par gaz comprimé, la course du ressort à gaz mesurant entre 60 cm et 120 cm.
